## Europäisches Patentamt
## European Patent Office
## Office européen des brevets

(11) Numéro de publication: **0 020 199**
**B1**

(12) **FASCICULE DE BREVET EUROPEEN**

(45) Date de publication du fascicule du brevet: 21.09.83

(51) Int. Cl.³: **G 11 B 7/08**

(21) Numéro de dépôt: **80400552.8**

(22) Date de dépôt: **23.04.80**

(54) **Système de commande de changement de face lue pour un lecteur optique de support d'information.**

(30) Priorité: **31.05.79 FR 7913981**

(43) Date de publication de la demande:
**10.12.80 Bulletin 80/25**

(45) Mention de la délivrance du brevet:
**21.09.83 Bulletin 83/38**

(84) Etats contractants désignés:
**DE GB IT NL SE**

(56) Documents cités:
**FR - A - 2 321 808**
**FR - A - 2 330 062**
**US - A - 3 848 095**

(73) Titulaire: **THOMSON-BRANDT**
**173, Boulevard Haussmann**
**F-75379 Paris Cedex 08 (FR)**

(72) Inventeur: **Oprandi, Pierre**
**"THOMSON-CSF" - SCPI 173, Bld Haussmann**
**F-75360 Paris Cedex 08 (FR)**
Inventeur: **Romeas, René**
**"THOMSON-CSF" - SCPI 173, Bld Haussmann**
**F-75360 Paris Cedex 08 (FR)**

(74) Mandataire: **Lepercque, Jean et al,**
**THOMSON-CSF SCPI 173, Bld Haussmann**
**F-75379 Paris Cedex 08 (FR)**

Courier Press, Leamington Spa, England.

Système de commande de changement de face lue pour un lecteur optique de support d'information

L'invention concerne un système de commande de changement de face lue pour lecteur optique d'un support d'information, et en particulier d'un vidéodisque.

Il est bien connu que la lecture d'informations gravées sur une face ou les deux faces d'un vidéodisque transparent peut s'effectuer au moyen d'un pinceau lumineux, provenant par exemple d'un laser, que l'on doit focaliser sur la surface gravée, à l'aide de moyens optiques appropriés. Des cellules photo-électriques disposées sous le disque reçoivent la lumière diffractée par la gravure constituée par exemple par des microcuvettes, délivrant ainsi un signal électrique modulé par l'information gravée sur le disque.

Dans le cas d'un vidéodisque portant des informations gravées sur ses deux faces, pour lire la face 2 ($f_2$), il suffit d'effectuer un translation du point de focalisation vers cette face 2 ($f_2$), en déplaçant par exemple le système optique de focalisation selon une direction normale au plan du disque. La tache lumineuse dans ces conditions devient de dimensions convenables pour pouvoir lire avec précision les microcuvettes formant la gravure de la face 2 ($f_2$), elle est par contre beaucoup trop grande pour pouvoir être influencée par la gravure de la face 1 ($f_1$). Il suffit donc dans la pratique de déplacer le point de focalisation de façon convenable, pour pouvoir passer immédiatement de la lecture d'une des faces du disque à la lecture de l'autre face, sans avoir à retourner le disque, comme c'est le cas dans la plupart des systèmes de disque double face (par exemple les disques audio).

Par ailleurs, il est également connu que la focalisation correcte du pinceau lumineux est obtenue le plus souvent au moyen d'un dispositif d'asservissement de focalisation comportant une boucle de rétroaction maintenant constante la distance entre le dispositif optique et la surface gravée du disque. L'accrochage et le maintien du dispositif d'asservissement sont obtenus par la détection du signal électrique correspondant à la gravure.

Le moyen le plus simple d'obtenir le passage de la focalisation, et donc de la lecture, d'une face à l'autre, consiste à ouvrir la boucle du dispositif d'asservissement de focalisation pendant un temps T préétabli et faire opérer au dispositif de focalisation un mouvement de translation correspondant au déplacement d'une face du disque à l'autre face. Ce mouvement de translation est obtenu en appliquant au dispositif de focalisation une impulsion de courant correctement calibrée en durée et en amplitude de manière à ce que le dispositif se déplace exactement de l'épaisseur du disque pendant le temps T. A cet instant, il suffit de refermer la boucle du dispositif d'asservissement de focalisation pour que celui-ci s'accroche sur la face opposée. Ce procédé très simple ne donne pas de résultats satisfaisants dans la pratique.

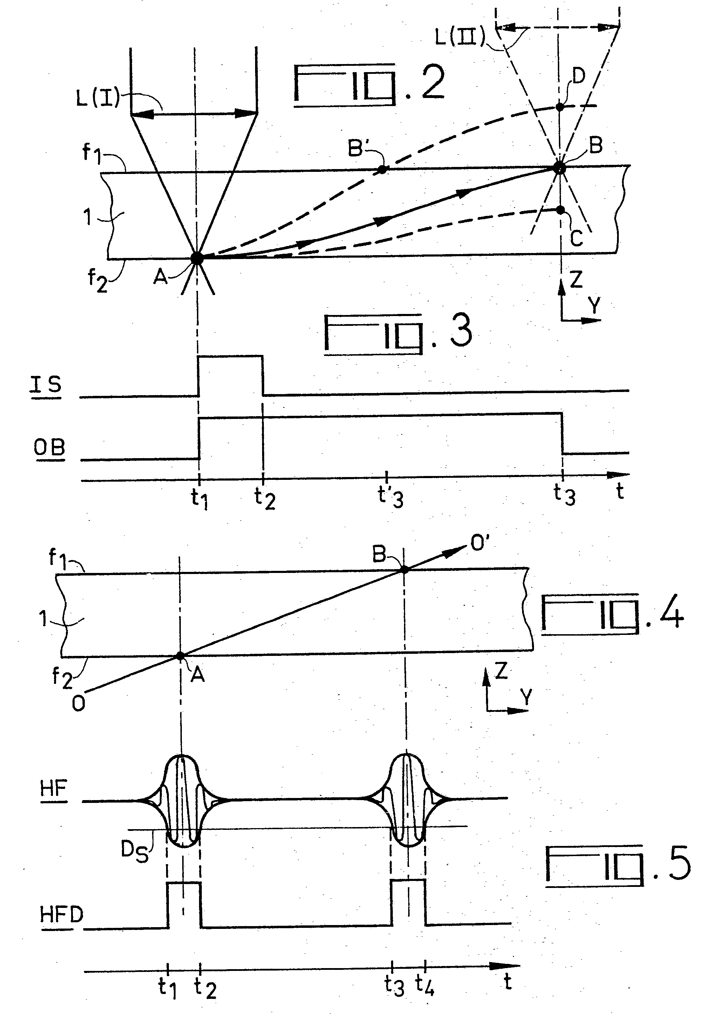

Bien que l'ordre de grandeur des sauts à effectuer et que les problèmes qui se posent ne soient pas de nature identique à ceux que vise à résoudre la présente invention, l'utilisation d'une impulsion calibrée peut être illustrée dans le cadre particulier du saut d'une piste à l'autre sur une même face de disque par référence à la demande de brevet FR—A—2 321 808. Il est fait notamment allusion aux risques de dépassement de la piste souhaitée encourus par la mise en oeuvre d'une telle méthode, ce en relation avec les figures 3a à 3d et du texte de la description associé.

Dans le cadre du changement de face lue, le mouvement de translation d'une face à l'autre comporte deux phases: pendant la première phase le dispositif de focalisation est animé d'un mouvement uniformément accéléré pendant la durée de l'impulsion de courant; pendant la deuxième phase, le dispositif est animé d'un mouvement balistique fonction de la vitesse acquise pendant le première phase. Or, cette vitesse, ainsi que le trajet parcouru pendant cette première phase, dépendent non seulement de l'accélération que l'on applique au dispositif de focalisation au moyen de l'impulsion calibrée mais également de la vitesse initiale de déplacement de ce dispositif à l'instant d'application de l'impulsion de courant. S'agissant d'un système d'asservissemnet bouclé corrigeant constamment l'erreur de focalisation, cette vitesse initiale est rarement nulle et vient s'additionner algébriquement à la vitesse communiquée au dispositif de focalisation, ce qui a pour conséquence d'amplifier ou de réduire le mouvement de translation opéré par le dispositif de focalisation pendant le temps T.

En outre, du fait de l'accélération de la pesanteur les mouvements de translation de la face 1 vers la face 2 ou de la face 2 vers la face 1 sont différents. Enfin, d'autres paramètres peuvent influencer ce mouvement de translation: les frottements des parties mécaniques du dispositif de focalisation peuvent varier en fonction de la température, de l'humidité ou d'autres paramètres difficilement contrôlables.

Il est donc extrêmement délicat et peu fiable de réaliser le passage d'une face à l'autre par un procédé consistant à assigner une durée prédéterminée au changement de face.

Pour pallier ces inconvénients l'invention a pour objet un système de changement de face lue pour lecteur optique de support d'information enregistrée sur ses deux faces, la lecture s'effectuant à l'aide d'un dispositif optique focalisant un faisceau lumineux sur l'une des faces préalablement choisie; dispositif optique comportant des circuits de commande de focalisation comprenant une boucle de rétroaction, pour maintenir constante la distance entre le dispositif optique et la surface du support par asservissement sur un signal électrique, la lecture des informations enregistrées fournissant un signal électrique modulée haute fréquence et des moyens de détection recevant le signal électrique modulé haute fréquence dont la sortie fournit un signal détecté se présentant sous la forme d'un signal binaire prenant une première valeur logique lorsque l'amplitude du signal haute fréquence est supérieure à un seuil prédéterminé et une seconde valeur ligique lorsque l'amplitude du signal haute fréquence est inférieure à ce seuil; système caractérisé en ce qu'il comporte:

— des premiers moyens de commande pour générer un signal binaire de commande de changement de face lue dont les deux niveaux logiques représentent les deux faces à lire;

— des seconds moyens de commande combinant le signal détecté et le signal de commande de changement de face lue pour créer un signal binaire d'ouverture/fermeture de boucle de rétroaction, prenant un premier niveau logique commandant l'ouverture de la boucle de rétroaction, après réception d'une transition du signal de commande de changement de face lue et un second niveau logique commandant à nouveau la fermeture de la boucle de retroaction après réception d'une transition du signal détecté, de la seconde à la première valeur logique;

— et un générateur d'impulsion de commande de saut de face connecté aux sorties des premiers et seconds moyens de commande fournissant au circuit de commande de focalisation une impulsion de commande de saut de face en synchronisme avec les transitions du signal d'ouverture/fermeture de boucle de rétroaction; la polarité de l'impulsion de commande étant choisie telle qu'elle communique alternativement au dispositif optique de focalisation un mouvement accéléré vers la face préalablement choisie lors de la transition du second au premier niveau logique du signal d'ouverture/fermeture de la boucle de rétroaction et une décélération lors du retour au second niveau logique permettant la focalisation sur la face choisie.

L'invention sera mieux comprise et d'autres caractéristiques apparaîtront à la lecture de la description ci-après en se référant aux dessins annexés parmi lesquels:

— la figure 1 illustre le mécanisme de la lecture d'un vidéodisque transparent gravé sur ses deux faces.
— la figure 2 et le chronogramme de la figure 3 illustrent un premier procédé de commande de changement de face de lecture selon l'art connu.
— les figures 4 et 5 illustrent les phenomènes mis en jeu dans l'invention.

— les figures 6 et 7 illustrent les dispositions retenues par l'invention.
— la figure 8 est un système de commande de changement de face lue selon l'invention.
— la figure 9 est un chronogramme afférent à la figure 8.

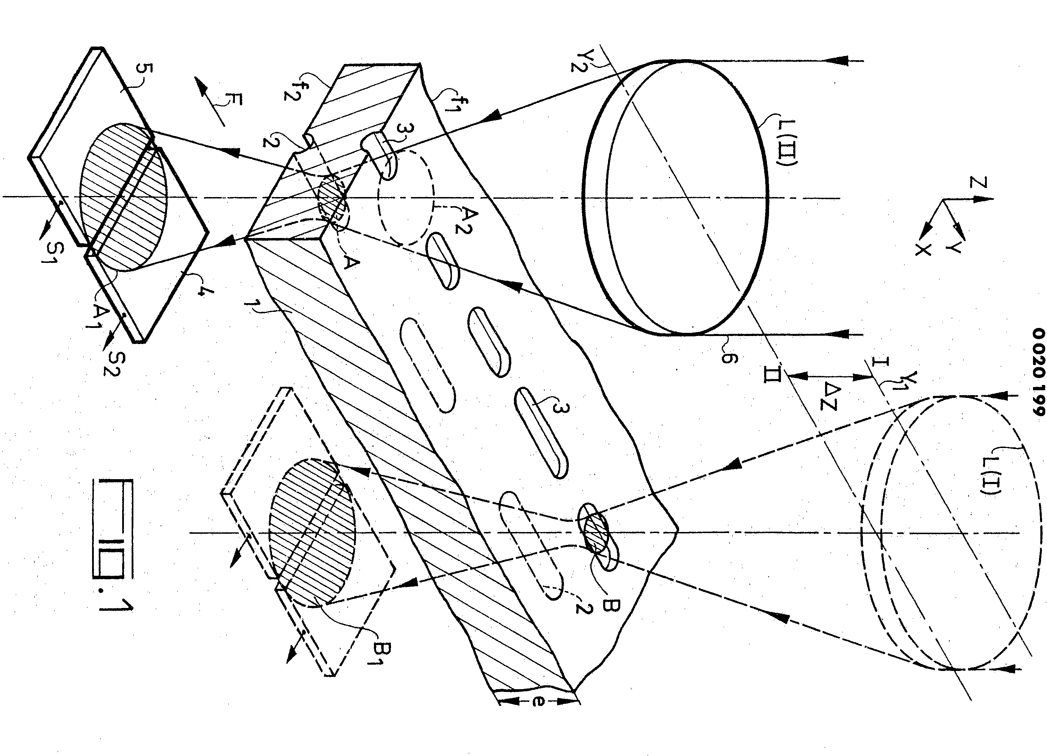

La figure 1 illustre le mécanisme de la lecture optique d'un vidéodisque transparent gravé sur ses deux faces. Le dispositif de focalisation ainsi que le procédé d'enregistement par gravure de microcuvettes sur un vidéodisque sont bien connus de l'homme de métier. Ce dispositif et ce procédé sortent du cadre de l'invention. Il est cependant utile d'en rappeler les principes généraux. Un pinceau lumineux produit par un laser (non représenté sur la figure 1) est focalisé sur l'une des faces, par exemple la face $f_2$, d'un vidéodisque à l'aide d'un système optique symbolisé par la lentille L dans la position II, le centre optique de cette lentille L (II) est situé sur un axe $Y_2$, parallèle à l'axe Y du trièdre de référence XYZ dessiné sur la figure 1. Il a été dessiné sur la figure 1 un fragment de vidéodisque en matière transparente d'épaisseur. Ce vidéodisque comporte des pistes concentriques comportant des microcuvettes 3 sur la face $f_1$ et 2 sur la face $f_2$. Ces microcuvettes représentent des informations codées. La lecture de ces informations s'effectue par focalisation du faisceau 6 sur ces microcuvettes. Sur la figure 1, cette focalisation est illustrée par le spot A. Les rayons lumineux sont ensuite diffractés par les microcuvettes et détectés par des cellules photo-électriques 4 et 5, dont les sorties $S_1$ et $S_2$ sont connectées aux entrées d'un amplificateur différentiel non représenté. La tache de diffraction dans le plan des cellules 4 et 5 est illustrée sur la figure 1 par la référence $A_1$. Le faisceau, focalisé sur la face $f_2$, forme une tache $A_2$ sur la face $f_1$ dont les dimensions sont beaucoup plus grandes que les dimensions des microcuvettes 3 gravées sur cette face. Les rayons lumineux focalisés sur la face $f_2$ ne sont donc pas perturbés par les microcuvettes 3 à la traversée de cette face. Dans ces conditions la gravure de la face $f_1$ n'a aucune influence sur le signal électrique délivré par les cellules placées sous le disque 4 et 5.

Si l'on désire lire l'information gravée sur la face $f_1$, il suffit donc de focaliser le faisceau 6 sur cette face. Cette focalisation est réalisée en déplaçant le dispositif de focalisation, et en particulier l'optique L d'une distance ΔZ pour passer de la position II à la position I, parallèlement à l'axe Z de référence. Il doit être rappelé que le vidéodisque est animé d'un mouvement de rotation que se traduit au voisinage de la tache de focalisation A par un mouvement sensiblement parallèle à l'axe Y. Ce mouvement est symbolisé sur la figure 1 par la flèche F. Pendant le temps nécessaire au déplacement de la lentille L de la position II à la position I, le disque continuant à tourner (et les microcuvettes ayant continué de défiler sous le faisceau de lecture), le faisceau lumineux se focalisera en B. Les positions relatives du vidéodisque 1 et du dispositif de focalisation en position II sont illustrées sur la partie droite de la figure 1 en pointillé. Il va de soi que le mouvement du dispositif de focalisation se fait selon le seul axe Z et que les détecteurs restent immobiles dans l'espace. Le centre optique de la lentille L (II) se trouve maintenant sur l'axe $Y_1$. La focalisation se faisant désormais sur la face $f_1$, les rayons lumineux sont diffractés en $B_1$.

Que la focalisation se fasse sur la face $f_1$ ou sur la face $f_2$, le vidéodisque étant animé d'un mouvement de rotation, les cellules photo-électriques 4 et 5 vont donc détecter un signal haute fréquence modulé respectivement par les microcuvettes 3 ou 2. Ce signal est utilisé d'une part pour la lecture proprement dite des information et, d'autre part, pour ouvrir ou fermer la boucle de rétroaction du dispositif d'asservissement. Pour ce faire on détecte les signaux haute fréquence. Ce procédé est bien connu de l'homme de métier et ne sera pas décrit plus avant.

Les figures 2 et 3 illustrent le procédé de changement de face lue de l'art connu, précédemment décrit. On suppose qu'à l'instant $t_1$, le dispositif de focalisation se trouve asservi sur la face $f_2$ du vidéodisque 1. Si l'on désire changer de face lue, on ouvre la boucle de rétroaction du dispositif d'asservissement à l'aide du signal OB passant d'un état logique "0" à un état logique "1". Ce signal a une durée T égale à $t_1$ $t_3$. A l'instant $t_1$, on applique une impulsion calibrée IS aux organes commandant le déplacement du dispositif de focalisation pendant un temps égal à la durée $t_1$ $t_2$. Cette impulsion est destinée à imprimer au dispositif de focalisation un mouvement de translation vers la face $f_1$, qu'il est supposé atteindre au point B au bout d'un temps T égal à $t_1$ $t_3$. A cet instant $t_3$ il suffit de refermer la boucle de rétroaction du dispositif d'asservissement de focalisation pour que celui-ci s'accroche sur la nouvelle face lue, c'est-à-dire la face $f_1$. Pendant une première phase correspondant à la durée de l'impulsion IS, le dispositif de focalisation symbolisé par l'optique L (I) est animé d'un mouvement uniformément accéléré vers la position II. Or la vitesse acquise pendant cette première phase dépend non seulement de l'accélération que l'on applique au dispositif de focalisation au moyen de l'impulsion calibrée mais également de la vitesse initiale de déplacement de ce dispositif à l'instant $t_1$. Cette vitesse initiale s'additionne algébriquement à la vitesse acquise. Il s'en suit que dans certaines conditions le dispositif de focalisation se déplace plus ou moins vite que la vitesse de déplacement correspondant à la trajectoire moyenne AB. Pour une vitesse de déplacement supérieure, on obtient par exemple la trajectoire A B′ D pendant le temps T et pour une vitesse de déplacement inférieure, on obtient la trajectoire A C. Il s'en suit que dans le premier cas, la traversée de la face $f_1$ se fait au point B′, c'est-à-dire au temps $t_3$ alors que dans le second cas, au temps $t_3$, le point A se trouve en C et n'a pas encore traversé la face $f_1$. Les points D et C sont trop éloignés de la face $f_1$ pour obtenir un accrochage rapide et correcte du dispositif d'asservissement de focalisation sur la face $f_1$ du vidéodisque lorsque l'on referme à nouveau la boucle de rétroaction du dispositif d'asservissement.

L'invention va maintenant être décrite en relation avec les figures 4 à 7.

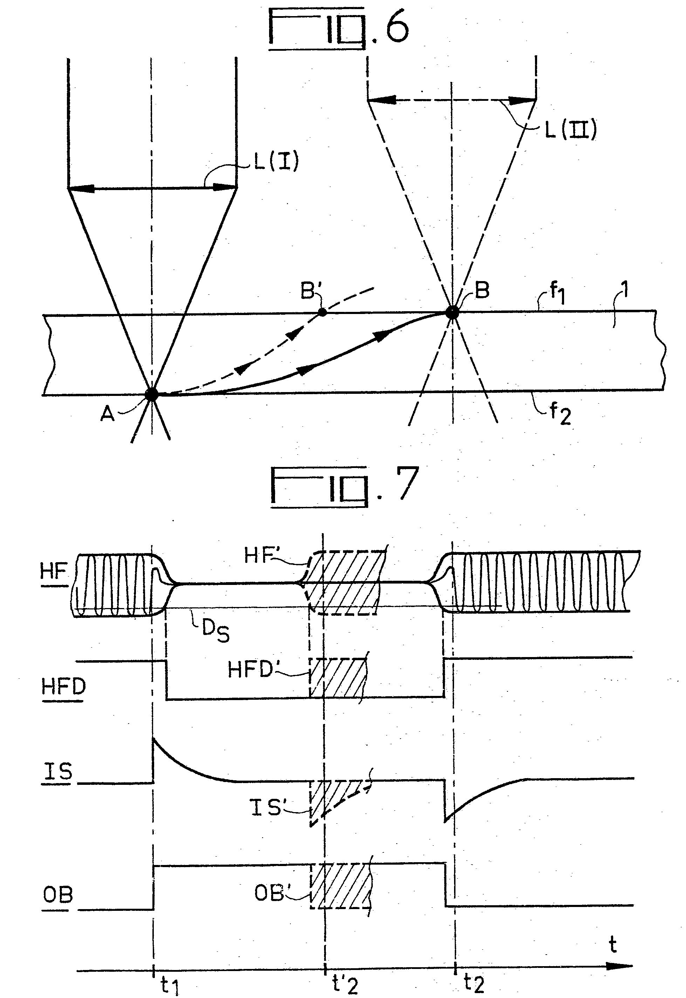

Sur la figure 4, on suppose que la boucle de rétroaction du dispositif d'asservissement étant ouverte, il soit imprimé au dispositif de focalisation un mouvement balistique lui faisant croiser successivement les deux faces du disque $f_1$ et $f_2$, tel que représenté par la droite AB sur l'axe OO'. On constate que sur la sortie de l'amplificateur différentiel (non représenté) connecté aux cellules de lecture 4 et 5 de la figure 1, on recueille, lorsque le point de focalisation arrive à proximité puis croise une face gravée du disque, une salve de signaux modulés que nous appelerons signal haute fréquence dans ce qui suit, représenté sur la figure 5 sur la ligne "HF". Il est possible de détecter par des moyens électroniques connus ces salves et de les transformer en impulsions telles que présentées sur la ligne "HFD" de la figure 5. Ces moyens électroniques sont connus et généralement utilisés dans les lecteurs de vidéodisque pour permettre l'accrochage initial du servomécanisme de focalisation. A titre d'exemple, la demande de brevet FR—A—2 330 062 décrit une telle disposition. La détection comprend une opération de redressement et une opération d'intégration. L'impulsion "HFD" a un niveau logique "1" pendant les intervalles $t_1$ $t_2$ et $t_3$ $t_4$. Les durées de ces intervalles sont déterminées précisément par une logique à seuil $D_S$. Le seuil $D_S$ étant choisi suffisamment haut pour éliminer des signaux de bruit parasites éventuels et discriminer sans ambiguïté l'apparition du signal haute fréquence.

Partant de ces constatations, le fonctionnement du système de changement de face lue suivant l'invention est décrit en relation avec les figures 6 et 7.

La lecture étant supposée s'effectuer sur la face $f_2$, à un instant $t_1$ quelconque on ouvre la boucle du dispositif d'asservissement de focalisation, au moyen du signal OB, en même temps qu'on lui applique une impulsion brève de commande de saut de face IS. Sous l'effet de cette impulsion le point de focalisation quitte la face $f_2$ du vidéodisque au point A pour se diriger vers la face $f_1$ suivant la trajectoire AB, ce qui a pour effet de provoquer l'extinction du signal haute fréquence HF de lecture de la face $f_2$, entraînant le basculement du signal détecté HFD, lorsque le signal haute fréquence décroit en dessous du seuil prédéterminé $D_S$. En B, le point de focalisation va croiser la face $f_1$. Juste avant d'atteindre ce point B, le signal haute fréquence HF va recommencer à croître pour atteindre le seuil $D_s$. Il s'en suit que le signal détecté HFD bascule à nouveau, cette transition entraînant à son tour, le basculement du signal OB et la fermeture de la boucle de rétroaction du dispositif d'asservissement de focalisation, provoquant l'accrochage de celui-ci sur la face $f_1$ du disque. En synchronisme avec la fermeture de boucle, une impulsion de freinage est envoyée au dispositif de focalisation pour éviter le dépaessement balistique du point B, cette impulsion ayant une polarité inverse de l'impulsion d'accélération.

Si on suppose que pour une raison quelconque, le point de focalisation ne se soit pas déplacé suivant la trajectoire AB mais par exemple, de façon plus rapide, suivant la trajectoire AB'. La traversée de la face $f_1$ se fait donc au temps $t'_2$. La remontée du signal haute fréquence devient effective un peu avant cet instant $t'_2$ provoquant le basculement du signal HFD et du signal OB ainsi que la production d'une impulsion de freinage IS. Ceci a eu pour seul effet de raccourcir le temps T nécessaire au passage de la face $f_2$ à la face $f_1$ du vidéodisque, mais les signaux de commande de fermeture de boucle et de freinage ont dans tous les cas été envoyées exactement au moment où le point de focalisation est arrivé à proximité immédiate de la face $f_1$.

Le processus pour passer de la face $f_1$ à la face $f_2$ comprend les mêmes étapes, il faut seulement inverser les sens respectifs des impulsions d'accélération et de freinage. Ces impulsions peuvent être élaborées de façon très simple, par différentiation du signal d'ouverture/fermeture de boucle OB ou de son complément.

Dans le système de commande de changement de face lue selon l'invention, seule est à ajuster l'amplitude des impulsions IS d'accélération et de freinage (qui sont toujours identiques en forme et en amplitude, mais inversées l'une par rapport à l'autre). Cet ajustement est peu critique, on cherche seulement à obtenir le temps de changement de face T le plus court possible compatible avec un fonctionnement sûr du système de commande de face lue. L'expérience a montré qu'un temps moyen T égal à environ 1,5 ms pour un disque dépaisseur 150 microns donnait un fonctionnement très stable du système.

Pour que le système fonctionne correctement, on doit également disposer d'informations permettant de reconnaître la face lue. En effet, le dispositif d'asservissement fonctionne de façon absolument sûr e lorsque le disque ne comporte pas de gravure sur l'une de ses faces, cette face non gravée ne délivrant aucun signal, il n'est pas possible que le servomécanisme de focalisation puisse s'y accrocher. Il n'en va pas de même si les deux faces du disque sont porteuses d'une information gravée, en effet chacune des faces pouvant délivrer un signal électrique modulé, le dispositif d'asservissement peut s'accrocher indifféremment sur l'une ou l'autre sans qu'il soit possible de les différentier, ce en particulier lors de l'accrochage initial. En outre sous l'influence de signaux parasites transitoires, un changement de face lue intempestif peut se produire. Dans ce cas, si par exemple la face précédemment lue était la face $f_1$, le dispositif d'asservissement restera accroché sur la face $f_2$ et les informations lues seront les informations gravées sur la face $f_2$.

Pour éviter cette ambiguité, on peut utiliser tous procédés et dispositifs permettant la reconnaissance de la face lue. Un procédé particulièrement avantageux lorsque la voie son d'un signal de télévision est enregistrée sous forme numérique va être rappelé dans ce qui suit. Cet enregistrement peut comporter 40 bits. Selon ce procédé de reconnaissance de la face lue, on ajoute un bit au train de bits représentant la voie son. Par convention les bits de la voie son portent des numéros allant de 1 à 40. Un bit supplémentaire identifie la face lue. Ce bit est porté en permanence au niveau logique "0" pour l'une des faces et au niveau logique "1" pour l'autre face. Ce bit ainsi que les bits de son sont enregistrés pendant l'intervalle de retour du balayage de ligne. Pour les besoins de la présente invention, ce bit supplémentaire représentant la face lue est transmis au système de commande de changement de face lue.

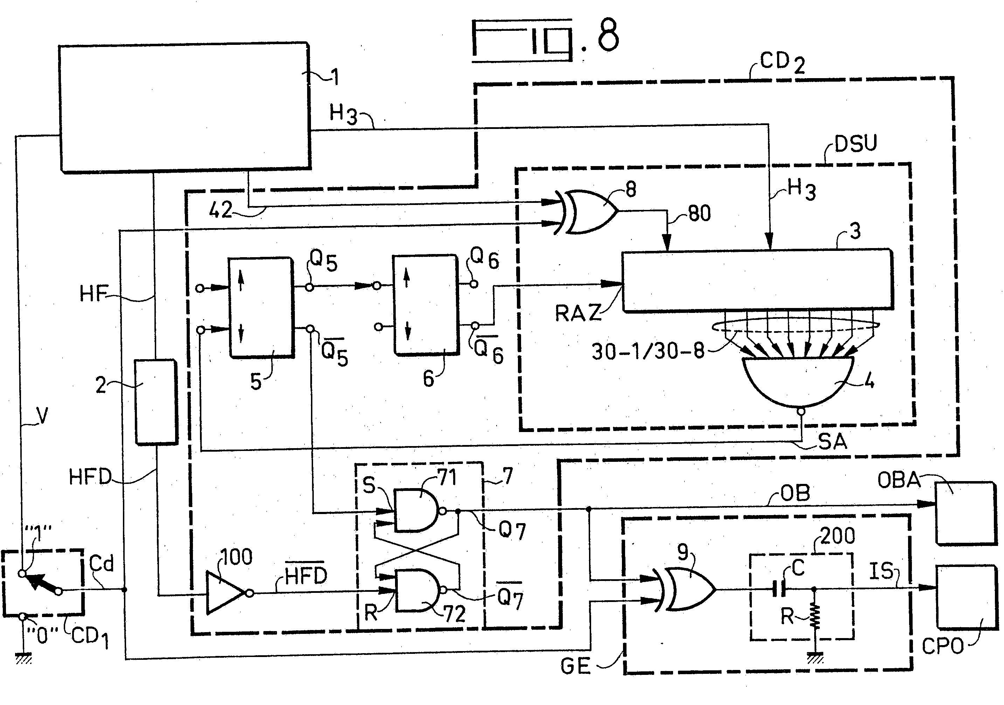

La figure 8 décrit une réalisation préférée du système de commande de changement de face lue selon l'invention. La référence 1 représente les circuits habituels d'un lecteur de vidéodisque ainsi que les circuits d'horloge et de synchronisation associés, fournissant en particulier les signaux d'horloge $H_3$ à la fréquence de balayage de ligne nécessaires au dispositif de contrôle de la face lue, représenté sur la figure 8 par le référence DSU. Ces circuits fournissent également le bit supplémentaire représentant la face lue sur la connexion 42 ainsi que le signal haute fréquence HF provenant de la lecture des informations gravées sur l'une ou l'autre face et une tension continue V représentant le niveau logique "1" selon le standard des circuits intégrés utilisés. Cette dernière tension est dans le cas d'un standard dit "TTL", de 5 volts.

Le système de commande de changement de face selon l'invention comporte essentiellement trois circuits. Un premier circuit de commande $CD_1$ produisant un signal binaire Cd de "commande de changement de face lue", un second circuit de commande $CD_2$ produisant le signal d'ouverture/fermeture de boucle OB et un générateur GE produisant une impulsion de commande de saut de face IS. Le circuit $CD_1$ peut être constitué simplement par un commutateur à deux directions, connectant alternativement la sortie Cd à une valeur logique "1" (V) ou une valeur logique "0" (symbolisé par la masse de circuit). Le bit supplémentaire identifiant la face lue arrive sur une entrée de la porte "OU-EXCLUSIF" 8, cette porte reçoit sur son autre entrée le signal de commande Cd. Suivant la position du commutateur de choix de face du circuit de commande $CD_1$, cette porte 8 laisse passer sans modification le bit supplémentaire, c'est le cas par exemple de la face $f_1$ pour laquelle ce bit est par convention toujours à "0" ou, et c'est le cas de la face $f_2$, pour laquelle le bit supplémentaire est toujours à "1", la porte 8 inverse le bit. La sortie de la porte "OU-EXCLUSIF" 80 est transmise à l'entrée série d'un registre à décalage 3 à huit sorties parallèles (30—1/30—8). Lorsqu'on est correctement positionné sur la face désirée par $CD_1$, l'entrée du registre à décalage 3 ne reçoit que des "0" (mise à part éventuellement quelques bits erronés dus à des altérations survenues pendant le processus de transcription). Les sorties parallèles 30—1 à 30—8 sont transmises aux entrées correspondantes d'une porte "NON-ET" 4. La sortie de cette porte demeure donc toujours à l'état "1". Pour qu'il en soit autrement, il faut selon ce procédé de reconnaissance de face lue particulier, huit erreurs consécutives pour que cette sortie passe à l'état "0", ce naturellement en l'absence de commande de changement de face lue.

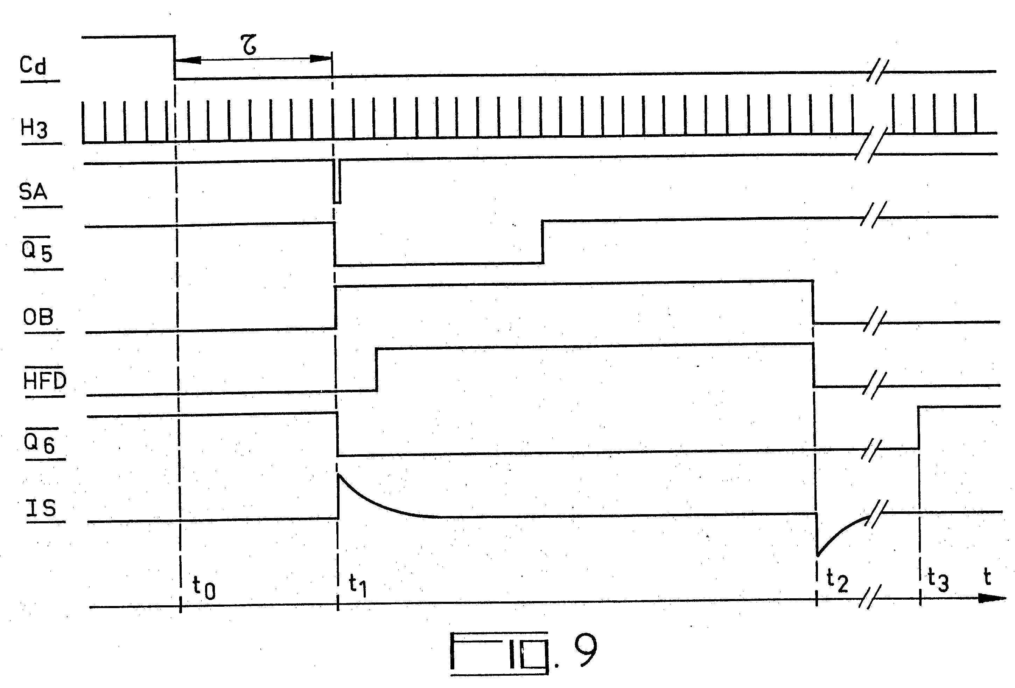

Si, étant positionné sur l'une des faces du disque, en régime de lecture stabilisé, le commutateur $CD_1$ est manoeuvré d'une position à l'autre, ce qui est le cas sur le chronogramme de la figure 9 à l'instant $t_0$, le basculement de ce commutateur provoque, via la porte 8, un changement d'état des bits supplémentaires consécutifs arrivant à l'entrée 80 du registre à décalage 3. C'est alors une succession de bits tous au niveau "1" qui entrent dans ce registre. Au bout du huitième bit consécutif au niveau "1" entré dans le registre 3, c'est à dire au bout du demps $t_7$, celui-ci présente un niveau 1 sur toutes les sorties 30—1 à 30—8, ce qui provoque le changement d'état de "1" vers "0" de la sortie SA de la porte 4. Ce changement d'état déclanche une bascule monostable 5, laquelle par sa sortie inversée $Q_5$ provoque le basculement d'une bascule bistable de type RS:7 formée par les deux portes "NON-ET" 71 et 72. La sortie $Q_7$ de cette bascule fournit le signal d'ouverture/fermeture de boucle de rétroaction OB. Les signaux haute fréquence HF provenant de la lecture des gravures représentant l'information enregistrée sont détectés, c'est-à-dire redressés et intégrés, par un circuit 2 fournissant un signal détecté HFD, inversé par l'inverseur 100 et transmis à l'entrée R de la bascule bistable 7. Le circuit 2 comporte également une logique à seuil destinée à éliminer le bruit. La porte "OU-EXCLUSIF" 9 et le circuit de différentiation RC ont pour but de délivrer des impulsions de saut de face et de freinage de polarité convenable. En effet, lorsque $CD_1$ est positionné sur la face $f_1$, le circuit ne peut délivrer que des impulsions permettant d'effectuer un saut de la face $f_2$ vers la face $f_1$, et lorsque $CD_1$ est positionné sur la face $f_2$, la porte "OU-EXCLUSIF" 9 devenant inverseuse, les impulsions délivrées permettent seulement le passage de la face $f_1$ à la face $f_2$.

La bascule bistable 7 est commandée par la sortie $Q_5$ de la bascule monostable 3 sur son entrée 5 et le signal HFD sur son entrée R, Or, si le passage à "0" de la sortie $Q_3$ de la bascule monostable 5 provoque bien le passage à "1" de la sortie $Q_7$ de la bascule bistable 7, cet état reste fugitif tant que l'entrée R n'est pas passée à l'état "1", ce qui n'intervient que lorsque sous l'effet de l'impulsion de saut IS, le point de focalisation du dispositif de lecture s'est suffisammnet éloigné de la gravure de la face que l'on veut quitter. La commande sur l'entrée S doit donc être maintenue pendant un temps suffisamment long (environ 500 ms), c'est le but de la bascule monostable 5. La bascule monostable 6 est destinée pour sa part à empêcher l'accès au registre 3 des bits supplémentaires, forcément erronés, qui arrivent pendant le temps de passage d'une face à l'autre et éviter ainsi la production d'impulsions erronées SA. Cette bascule monostable 6 produit des impulsions de longueur suffisante pour permettre aux différents servomécanismes de se stabiliser sur la nouvelle face après chaque saut (environ 100 à 250 millisecondes). L'entrée de remise à zéro (RAZ) du registre 3 est reliée à la sortie $Q_6$ de la bascule monostable 6. Ainsi il n'est pas autorisé de nouveaux changements de face avant que ce temps soit écoulé.

Pendant toute la durée du fonctionnement de l'appareil, le dispositif de contrôle de face lue DSU contrôle en permanence que le servomécanisme de focalisation soit bien positionné sur la face du disque qui a été sélectionnée. En effet si tel n'était pas le cas, les bits supplémentaires arriveraient à l'état "1" sur l'entrée 80 du registre à décalage 3, et au bout du huitième bit consécutif à l'état "1" déclencheraient automatiquement le processus décrit précédemment de changement de face. Ceci est particulièrement utile pour positionner automatiquement le dispositif de lecture sur la face choisie lors d'un changement de disque.

La figure 9 est un chronogramme illustrant les principaux signaux rencontrés dans le système de commande de changement de faces de la figure 8. Au temps $t_0$ par basculement du commutateur du circuit de commande $CD_1$, le signal de sortie Cd passe de l'état "1" à l'état "0". Il s'en suit qu'au bout de huit impulsions d'horloge $H_3$ et donc de huit comparaisons successives, la sortie SA de la porte "NON-ET" 4 passe de l'état "1" à l'état "0", provoquant le basculement des bascules monostables 5 et 6. La sortie inversée $Q_6$ est reliée à une entrée de remise à zéro RAZ du registre à décalage 3, réinitialisant à l'instant $t_1$ le registre à décalage. La sortie SA reprend l'état logique "1". Au même instant $t_1$ le signal d'ouverture/fermeture de boucle OB prend la valeur logique "1" commandant ainsi l'ouverture de la boucle de rétroaction du dispositif d'asservissement OBA.

Cette transition provoque la génération d'une impulsion de commande de saut de face IS positive. Cette impulsion étant obtenue par différentiation du signal de sortie de la porte "ET-EXCLUSIF" 9, cette impulsion a une forme exponentielle décroissante et est transmise au circuit de commande de positionnement du dispositif de focalisation CPO. Il s'en suit que le point de focalisation quitte la face lue pour se diriger vers l'autre face, provoquant la disparition du signal haute fréquence HF et de son signal détecté HFD. Ce signal réapparait au temps $t_2$, juste avant que le point de focalisa-

— Registres à décalage à entrée série et sorties parallèles (3)
— Portes "OU-EXCLUSIF" (8,9)
— Inverseur (100)
— Porte "NON-ET" (4,71,72)
— bascules monostables

Le circuit différentiateur 200 peut être constitué par une résistance de valeur typique 10 KΩ et un condensateur de valeur typique 10 000 pF.

## Revendications

1. Système de changement de face lue pour lecteur optique de support d'information (1) enregistrée sur les deux faces ($f_1$, $f_2$), la lecture s'effectuant à l'aide d'un dispositif focalisant un faisceau lumineux sur l'une des faces préalablement choisie; dispositif optique comportant des circuits de commande de focalisation (CPO) comprenant une boucle de rétroaction, pour maintenir constante la distance entre le dispositif optique et la surface du support (1) par asservissement sur un signal électrique, la lecture des informations enregistrées fournissant un signal électrique modulée haute fréquence (HF) et des moyens de détection (2) recevant le signal électrique modulé haute fréquence (HF) dont la sortie fournit un signal détecté (HFD) se présentant sous la forme d'un signal binaire prenant une première valeur logique lorsque l'amplitude du signal haute fréquence est supérieure à un seuil prédéterminé ($D_S$) et une seconde valeur logique lorsque l'amplitude du signal haute fréquence est inférieure à ce seuil ($D_S$); système caractérisé en ce qu'il comporte:

— des premiers moyens de commande (CD₁) pour générer un signal binaire de commande de changement de face lue (Cd) dont les deux niveaux logiques représentent les deux faces à lire ($f_1$, $f_2$);
— des seconds moyens de commande (CD₂) combinant le signal détecté (HFD) et le signal binaire de commande de changement de face lue (Cd) pour créer un signal binaire d'ouverture/fermeture de boucle de rétroaction (OB), prenant un premier niveau logique commandant l'ouverture de la boucle tion atteigne l'autre face. Le processus inverse se produit, le signal OB reprend la valeur logique "0" et provoque la production d'une impulsion de freinage IS de polarité opposée à l'impulsion précédemment produite. La bascule monostable 6 reprend son état d'équilibre à l'instant $t_3$.

A titre d'exemples, les types de circuits intégrés ci-dessous, introduits dans le commerce par la firme. TEXAS-INSTRUMENTS, peuvent être choisis pour réaliser les circuits du système de commande de changement de face lue de la figure 8:

circuits SN 74164 N

circuits SN 7486 N
circuits SN 7404 N
circuit SN 7430 N
circuit SN 74123 N

de rétroaction, après réception d'une transition du signal de commande de changement de face lue et un second niveau logique commandant à nouveau la fermeture de la boucle de rétroaction après réception d'une transition du signal (HFD) détecté, de la seconde à la première valeur logique;
— et un générateur d'impulsion de commande de saut de face (GE) connecté aux sorties des premiers et seconds moyens de commande fournissant au circuit de commande de focalisation (CPO) une impulsion de commande de saut de face (IS) en synchronisme avec les transitions du signal d'ouverture/fermeture de boucle de rétroaction (OB); la polarité de l'impulsion de commande étant choisie telle qu'elle communique alternativement au dispositif optique de focalisation (L) un mouvement accéléré vers la face préalablement choisie lors de la transition du second ou premier niveau logique du signal (OB) d'ouverture/fermeture de la boucle de rétroaction et une décélération lors du retour au second niveau logique permettant la focalisation sur la face choisie.

2. Système selon la revendication 1, caractérisé en ce que les seconds moyens de commande (CD₂) comportent en outre un dispositif de contrôle de face lue (DSU) recevant à cadence régulière, en synchronisme avec la lecture des informations enregistrées sur le support (1), un signal d'état (42) pouvant prendre deux valeurs distinctes représentant chacune l'une des deux faces du support d'enregistrement; le dispositif de contrôle comportant des moyens de comparaison permanente (8) de ce signal (42) au signal de commande de changement de face lue (Cd) dont la sortie est transmise à des moyens de mémorisation.

3. Système selon la revendication 2, caractérisé en ce que les moyens de mémorisation sont constitués par une mémoire circulante (3) comportant plusieurs cellules enregistrant sous forme d'impulsions codées binaires un nombre N prédéterminé de résultats successifs de comparaison et par des moyens combinatoires (4) fournissant une impulsion de sortie lorsque N résultats successifs de comparaison sont négatifs et en ce que cette impulsion de sortie est transmise, via des moyens de temporisation (5, 6) à, d'une part, une entrée de réinitialisation (RAZ) de la mémoire circulante (3) et, d'autre part, à des moyens de commutation (7) compris dans les seconds moyens de commande (CD₂).

4. Système selon la revendication 3, caractérisé en ce que N est choisi égal à 8.

5. Système selon l'une quelconque des revendications 2 à 4, caractérisé en ce que les moyens de comparaison (8) sont constitués par un premier circuit logique "OU-EXCLUSIF", la mémoire circulante par un registre (3) à décalage à huit étages, les moyens combinatoires (4) par un circuit logique "NON-ET" à huit entrées et les moyens de temporisation par deux bascules (5, 6) monostables connectées en cascade, la sortie de la seconde bascule (6) étant reliée à une entrée de remise à zéro du registre à décalage (3).

6. Système selon les revendications 1 et 5, caractérisé en ce que les premiers moyens de commande sont constitués par un commutateur (CD1) à deux positions, sélectionnant au choix une des valeurs logiques binaires "1" ou "0", les moyens seconds de commutation (7) des seconds moyens de commande (CD₂) sont constitués par une bascule bistable de type RS recevant sur son entrée S la sortie de la première bascule monostable et sur son entrée R, via un circuit logique inverseur, le signal haute fréquence (HFD); et en ce que le générateur d'impulsion de commande est constitué par un second circuit (9) logique 'OU-EXCLUSIF" recevant sur une première entrée la sortie vraie de la bascule de type RS et sur une seconde entrée la sortie du commutateur (CD7) à deux positions, et un circuit de type résistif-capacitif différentiant le signal de sortie du second circuit logique "OU-EXCLUSIF".

7. Système selon les revendications 5 et 6 caractérisé en ce que la première bascule (5) monostable délivre une impulsion de temporisation maintenant la bascule (7) bistable de type RS dans un premier état pendant une durée supérieure au temps nécessiare à la décroissance du signal haute fréquence modulé au-dessous du seuil prédéterminé et en ce que la seconde bascule (6) monostable délivre une impulsion de temporisation interdisant la production d'une impulsion à la sortie du circuit logique "NON-ET" pendant une durée supérieure au temps nécessaire aux circuits de commande de focalisation pour changer de face lue.

**Patentansprüche**

1. System zum Wechseln der gelesenen Seite für ein optisches Gerät zum Lesen eines zweiseitig (f₁, f₂) beaufschlagten Informationsträgers, bei dem der Lesevorgqng vermittels eines ein Lichtbündel auf eine der vorgewählten Seiten fokalisiert, wobei das optische Gerät Fokalisierungssteuerungskreise (CPO) mit einer Rückkopplungsschleife aufweist, um den Abstand zwischen dem optischen Garät und der informationsträgeroberfläche (1) durch Steuerung vermittels eines elektrischen Signals konstant zu halten, während das Lesen der aufgezeichneten Informationen ein moduliertes elektrisches Hochfrequenzsignal (HF) abgeben und Ermittlungsmittel (2) das modulierte elektrische Hochfrequenzsignal (HF) empfangen, dessen Ausgang ein ermitteltes Signal (HFD) liefert, das in Form eines binären Signals mit einem ersten logischen Wert vorliegt, wenn die Amplitude des Hochfrequenzsignals höher ist als ein vorbestimmter Schwellenwert (D_S), und mit einem zweiten logischen Wert, wenn die Amplitude des Hochfrequenzsignals niedriger ist als dieser Schwellenwert (D_S); dadurch gekennzeichnet, dass das System umfasst:

— Erste Steuermittel (CD₁) um ein binäres Steuersignal zum Wechsel der gelesenen Seite (Cd) zu erzeugen, dessen zwei logische Stufen die zwei zu lesenden Seiten (f₁; f₂) darstellen;

— Zweite Steuermittel (CD₂), welche das ermittelte Signal (HFD) und das binäre Steuersignal zum Wechsel der gelesenen Seite (Cd) kombinieren, um ein binäres Signal zum Offnen/Schliessen der Rückkopplungsschleife (OB) zu erzeugen, welche nach Erhalt einer Änderung des Signals zum Wechsel der gelesenen Seits eine erste, die Öffnung der Rückkopplungsschleife steuernde logische Stufe annimmt, sowie eine zweite logische Stufe, welch letztere erneut das Schliessen der Rückkopplungsschleife nach Erhalt einer Änderung des ermittelten Signals von dem zweiten zum ersten logischen Wert steuert.

— Und einen Erzeuger von Steuerimpulsen zum Seitenwechsel (GE) der mit den Ausgängen der ersten und zweiten Steuermittel verbunden ist, die der Fokalisierungssteuervorrichtung (CPO) einen Steuerimpuls zum Seitenwechsel (IS) synchron mit den Änderungen des Signals zum Öffnen/Schliessen der Rückkopplungsschleife (OB) liefern, wobei die Polung des Steuerimpules derart gewählt ist, dass sie die optische Fokalisierungsvorrichtung (L) abwechselnd einerseits, während das Übergangs von der zweiten zur ersten logischen Stufe (OB) des Öffnungs/Schliess-Signals der Rückkopplungsschleife einer beschleunigten Bewegung in Richtung auf die vorgewählte Seite und andererseits bei der Rückkehr zur zweiten logischen Stufe zwecks Ermöglichung der Fokalisierung auf die gewählte Seite einer Verzögerung unterwirft.

2. System nach Anspruch 1, dadurch gekennzeichnet, dass die zweiten Steuermittel (CD$_2$) ferner eine Kontrollvorrichtung der gelesenen Seite (DSV) besitzen, welche im regelmässigen Takt, synchron mit dem Ablesen der auf dem Träger (1) aufgezeichneten Informationen ein Zustandssignal (42) erhält, welches zwei verschiedene Werte annehmen kann, von denen jeder eine der zwei Seiten des Aufzeichnungsträgers darstellt; wobei die Kontrollvorrichtung Mittel zum ständigen Vergleich (8) dieses Signals (42) mit dem Steuersignal für den Wechsel der gelesenen Seite (Cd) besitzt, wovon der Ausgang mit Speichermitteln verbunden ist.

3. System nach Anspruch 2, dadurch gekennzeichnet, dass die Speichermittel durch einen zirkulierenden Speicher (3) gebildet sind, der mehrere Zellen enthält, die in Form binär codierter Impulse eine vorbestimmte Anzahl einander folgender Vergleichsergebnisse sowie durch Kombinationsmittel (4), die einen Ausgangsimpuls liefern, wenn N aufeinanderfolgende Vergleichsergebnisse negativ sind, und dadurch, dass dieser Ausgangsimpuls über Verzögerungsmittel (5, 6) einerseits an einen Zerorückstellungseingang (RAZ) des zirkulierenden Speichers (3) und andererseits an in dem zweiten Steuermittel (CD$_2$) enthaltene Kommutationsmittel (7) weitergeleitet wird.

4. System nach Anspruch 3, dadurch gekennzeichnet, dass N gleich 8 gewählt ist.

5. System nach einem der Ansprüche 2 bis 4, dadurch gekennzeichnet, dass die Vergleichsmittel (8) durch eine erste logische "ODER-EXCLUSIV"-Schaltung, der zirkulierende Speicher durch ein Acht-Stufen-Register, die Kombinationsmittel (4) durch eine logische "NEIN-UND"-Schaltung mit acht Eingängen und die Verzögerungsmittel durch zwei in Kaskade geschaltete monostabile Kippschaltungen gebildet sind, wobei der Ausgang der zweiten Kippschaltung mit einem Zerorückstellungseingang des Stufenregisters verbunden ist.

6. System nach den Ansprüchen 1 und 5, dadurch gekennzeichnet, dass die ersten Steuermittel durch einen Zwei-Positionen-Kommutator gebildet sind, der nach Wahl einen der logischen binären Werte "1" oder "0" auswählt, die zweiten Kommutationsmittel (7) der zweiten Steuermittel (CD$_2$) sind gebildet durch eine bistabile Kippschaltung des Typs RS, die an ihrem Eingang S den Ausgang der ersten monostabilen Kippschaltung und an ihrem Eingang R über ein logisches Umsteuergatter das Hochfrequenzsignal erhält; und dadurch, dass der Steuerimpulserzeuger gebildet ist aus einer zweiten logischen "ODER-EXCLUSIV"-Schaltung, die an einem ersten Eingang den echten Ausgang der Kippschaltung vom Typ RS und an einen zweiten Eingang den Ausgang des Zwei-Positionen-Kommutators erhält, und eine Schaltung vom "Widerstand=plus=Kapazität"-Typ, welche das Ausgangssignal der zweiten logischen "ODER-EXCLUSIV"-Schaltung differenziert.

7. System nach den Ansprüchen 5 und 6, dadurch gekennzeichnet, dass die erste monostabile Kippschaltung einen Verzögerungsimpuls liefert, welcher die bistabile Kippschaltung vom Typ RS länger, als die zur Abnahme des unterhalb des vorbestimmten Schwellenwertes modulierten Hochfrequenzsignals nötigen Zeit in einem ersten Zustand hält und dadurch, dass die zweite monostabile Kippschaltung einen Verzögerungsimpuls liefert, der die Erzeugung eines Impulses am Ausgang der logischen "NEIN-UND"-Schaltung länger als die von den Schaltungen zum Steuern der Fokalisierung zum Wechsel der gelesenen Seite benötigten Zeit untersagt.

## Claims

1. System for changing the read face for an optical reader of data support (1) recorded on two faces ($f_1$, $f_2$) the reading being carried out by using an optical device focalising a luminous beam on one of the previously selected faces; optical device comprising focalisation control circuits (CPO) comprising a feedback loop, to maintain constant the distance between the optical device and the surface of support (1) by a monitoring device dependant upon an electric signal, the reading of the recorded date supplying a high frequency (HF) modulated electric signal and detection means (2) receiving the high frequency (HF) modulated electric signal, the output of which supplies a detected signal (HFD) in the form of a binary signal assuming a first logic value when the amplitude of the high frequency signal is superior to a predetermined threshold (D$_s$) and a second logic value when the amplitude of the high frequency signal is inferior to this threshold (D$_s$); system characterized in that it comprises:

— first control means (CD$_1$) to generate a binary signal for controlling the change of the read face (Cd), the two logic levels of which represent the two faces to be read ($f_1$, $f_2$);
— second control means (CD$_2$) combining the detected signal (HFD) and the binary signal for controlling the change of read face (Cd) in order to create a binary signal for the opening/closing of the feedback loop (OB), assuming a first logic level controlling the opening of the feedback loop, after reception of a transition of the control signal for changing the read face, and a second logic level controlling again the closing of the feedback loop after reception of a transition of the detected signal (HED) from the second to the first logic value;
— and a control impulse generator for face change (GE) connected to the outputs of the first and second control means supplying to the focalisation control circuit (CPO) a control impulse for face change (15) synchronized with the transitions of the opening/closing signal of the feedback loop (OB); the polarity of the control impulse being such that it communicates alternately with the focalisation optical device (L) an accelerated movement towards the face previously selected at the moment of transition of second or first logic level of the opening/closing signal (OB) of the feedback loop and a deceleration at the moment of return to the second logic level allowing the focalisation on the selected face.

2. System according to claim 1, characterized in that the second control means ($CD_2$) comprise, furthermore, a control device of the read face (DSU) receiving at regular paces, synchronized with the reading of the data recorded on support (1), a state signal (42) able to assume two distinct values, each representing one of the two faces of the recording support; the control device comprising permanent comparison means (8) of this signal (42) with the control signal for changing the read face (Cd), the output of which is transmitted to memorising means.

3. System according to claim 2, characterized in that the memorising means are constituted by a shifting memory (3) comprising several cells registering in the form of binary-coded impulses a predetermined number N of successive comparison results and by combining means (4) supplying an output impulse when N successive comparison results are negative and in that this output impulse is transmitted, via temporisation means (5, 6) to, on the one hand, a reinitialisation input (RAZ) of the shifting memory (3) and, on the other hand, to commutation means (7) comprised in second control means ($CD_2$).

4. System according to claim 3, characterized in that N is selected as equal to 8.

5. System according to any one of claims 2 to 4, characterized in that comparison means (8) are constituted by a first EXCLUSIVE-OR logic circuit, the memory with an eight-stage shift register (3), combination means (4) by a NAND logic circuit having eight inputs and temporisation means by two monostable mulivibrators (5, 6) connected in series, the output of the second multivibrator (6) being connected to a return to zero input of the shift register (3).

6. System according to claims 1 and 5, characterized in that the first control means are constituted by a two-position commutator (D1), selecting by choice one of binary logic values "1" or "0", second commutation means (7) of second control means ($CD_2$) are constituted by a RS type flip-flop switch receiving on its entry S the output of the first monostable switch and on its input R, via a logic inverter circuit, the high frequency signal (FD); and in that the control impulse generator is constituted by a second logic EXCLUSIVE-OR circuit (9) receiving on a first input the true output of the RS type switch and on a second input the output of the two position commutator a resistance-capacitance circuit differentiating the output signal from the EXCLUSIVE-OR second logic circuit.

7. System according to claims 5 and 6, characterized in that the first monostable switch (5), delivers a temporisation impulse maintaining the RS-type flip-flop switch in a first state during a period longer than the time necessary for the decrease of the high-frequency signal modulated below the predetermined threshold and in that the second monostable switch delivers a temporisation impulse prohibiting the production of an impulse at the output of the NAND logic circuit during a period longer than the time necessary for the focalisation control circuits to change the read face.

0 020 199

Fig.1

$\boxed{\text{F}\Box\Box}.2$

L(I)

L(II)

$f_1$

1

$f_2$

A

B'

D

B

C

Z

Y

$\boxed{\text{F}\Box\Box}.3$

IS

OB

$t_1$   $t_2$   $t'_3$   $t_3$   t

$f_1$

1

$f_2$

A

B

O'

O

Z

Y

$\boxed{\text{F}\Box\Box}.4$

HF

$D_S$

HFD

$\boxed{\text{F}\Box\Box}.5$

$t_1$ $t_2$   $t_3$ $t_4$   t

# Fig.6

L(I)

L(II)

B'

B

$f_1$

1

A

$f_2$

# Fig.7

HF

HF'

$D_S$

HFD

HFD'

IS

IS'

OB

OB'

$t_1$

$t'_2$

$t_2$

t

FIG.8

FIG. 9

0 020 199